# EUROPEAN PATENT SPECIFICATION

(11) **EP 4 122 641 B1**
(45) Date of publication and mention of the grant of the patent: **10.04.2024**
(21) Application number: 22183366.8
(22) Date of filing: 06.07.2022
(51) Int. Cl.: B23P 11/00, E06B 3/273, B21D 53/74, B21D 47/04, B21D 39/04, E06B 3/263

(54) **ROLLING MACHINE FOR ASSEMBLING HEAT-CUT PROFILES**
WALZMASCHINE ZUM ZUSAMMENBAUEN VON WÄRMEGESCHNITTENEN PROFILEN
MACHINE DE LAMINAGE POUR ASSEMBLER DES PROFILÉS COUPÉS À CHAUD

(30) Priority: 20.07.2021 IT 202100019100
(43) Date of publication of application: 25.01.2023
(73) Proprietor: Oemme S.p.A., 44122 Ferrara (IT)
(72) Inventor: PELANDRA, Filippo, 44123 FERRARA (IT); SERMENGHI, Andrea, 40055 CASTENASO BO (IT)
(74) Representative: Modiano, Micaela Nadia

(56) References cited:
- EP-A1- 0 125 461
- EP-A2- 1 949 982
- WO-A1-2017/085684
- DE-A1- 2 825 301
- US-A- 4 592 123

## Description

The present invention relates to a rolling machine for assembling heat-cut profiles according to the preamble of claim 1. Such a rolling machine is known from WO 2017/085684 A1.

Heat-cut profiles are known which are generally constituted by at least two profile portions made of aluminum, so-called "shells," obtained by extrusion and connected to each other by interposition of one or more elongated connecting partitions, so-called "strips," made of thermally insulating material of the type of polyamide or other plastic material.

Each profile portion is provided with at least one longitudinal slot, which is bounded by two opposing ribs, so-called "hammers," one of which is deformable. The two profile portions are positioned side-by-side with their respective slots facing each other in pairs to define at least one receptacle for a corresponding strip with the associated deformable ribs arranged on the same side of the strip.

Such profiles are widely used in the field of the production of energy-saving windows and doors, in which the two profile portions are positioned one toward the inside and one toward the outside of the room in which the window or door is assembled, with the interposition of an air space defined between said profile portions and the strips which acts as a thermal barrier.

The assembly process of a heat-cut profile provides for the following working steps:
- knurling of the slots provided on the pair of profile portions to be assembled;
- pre-assembly of the profile by inserting a strip along each pair of mutually facing slots so as to obtain a semi-finished manufactured article generally constituted by at least two profile portions with at least one strip interposed;
- rolling of the deformable ribs in order to obtain the clamping of the strips and, therefore, the assembly of the profile.

According to a known operating method, these steps are carried out in series while the semi-finished manufactured article is transferred by known conveyance systems through the various working stations.

In particular, the rolling machine is crossed by the pre-assembled semi-finished manufactured article, which is moved along a substantially horizontal advancement direction, with the profile portions arranged one above the other and with the deformable ribs for clamping the strips exposed and accessible from opposite sides of the advancement direction.

Such rolling machines are therefore provided on each side of the advancement direction with a working assembly which comprises upper rollers and lower rollers adapted to apply a pressure on respective deformable ribs so as to obtain the final assembly of the invention.

One known type of rolling machine provides, on each side of the advancement direction, for the presence of a working assembly comprising a plurality of rolling assemblies, each constituted by an upper roller and a lower roller which rotate about a same substantially vertical axis of rotation and are supported in rotation by respective mutually coaxial shafts. In greater detail, in each rolling assembly the lower roller is supported in rotation by a hollow shaft, inside which a coaxial shaft for supporting the corresponding upper roller is inserted slidingly.

The work elevation of the upper roller with respect to the corresponding lower roller can be adjusted by actuating the sliding of the associated supporting shaft along the hollow shaft.

The supporting shaft of the upper roller must necessarily have a diameter that is smaller than that of the hollow shaft in which it is inserted slidingly and is positioned with an end portion which protrudes in a cantilever manner from said hollow shaft.

The supporting shaft of the upper roller is subjected to radial loads due to the contact reaction of the semi-finished product being worked, which tend to subject it to bending stresses, and therefore the length of the supporting shaft section that protrudes in a cantilever manner from the hollow shaft must be limited, so that excessive deformations, which would adversely affect the work performed, do not occur.

Therefore, these rolling machines are not free from drawbacks which include the fact that they have a limited possibility of adjusting the working elevation of the lower rollers, as well as the working elevation of the upper rollers with respect to said lower rollers.

This fact entails considerable complications in the assembly of profiles whose profile portions have different extensions and therefore different weights, since the profile portion of greater size and weight must be positioned above the other one by providing dedicated support apparatuses for the specific profile.

As an alternative, a rolling machine is known which provides, on each side of the working direction, a working assembly comprising a plurality of upper rollers and a plurality of lower rollers provided with respective support, adjustment and rotational actuation means, which are arranged in pairs coaxially in a vertical direction. In this case, the support, adjustment and rotational actuation assembly for the upper rollers is arranged above the one of the lower rollers and has such a space as to penalize accessibility to the working area. Even this solution, in any case, has a limited possibility to adjust the working elevation of the upper rollers with respect to the lower rollers.

The aim of the present invention is to eliminate the drawbacks mentioned above of the background art by devising a rolling machine for assembling heat-cut profiles which has wide intervals for adjustment of the working position of the rollers, so as to facilitate the arrangement and support of the pre-assembled manufactured article being worked regardless of its shape, dimensions and weight.

Within this aim, an object of the present invention is to keep the work area easily accessible in order to facilitate the assembly of the fixtures for supporting the pre-assembled manufactured article being worked.

A further object of the present invention is to allow the working of profiles which incorporate strips of different heights or of the offset type, as well as with a double heat bridge.

Not least object of the present invention is to provide a structure that is simple, relatively easy to provide in practice, of assured application, effective in operation, and of relatively low cost.

This aim and these and other objects that will become more apparent hereinafter are all achieved by a rolling machine for assembling heat-cut profiles according to claim 1 and optionally provided with one or more of the characteristics of the dependent claims.

Further characteristics and advantages of the present invention will become better apparent from the detailed description of a preferred but not exclusive embodiment of a rolling machine for assembling heat-cut profiles, illustrated by way of non-limiting example in the accompanying drawings, wherein:
Figures 1 and 2 are sectional views of a possible embodiment of a heat-cut profile before and after the work performed by the rolling machine for assembling heat-cut profiles, according to the invention;

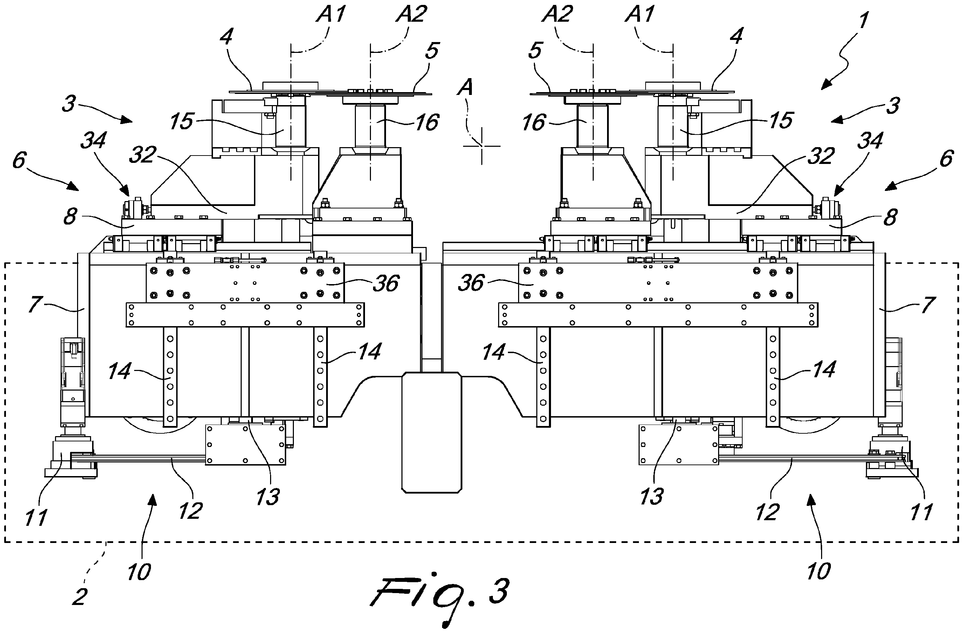

Figure 3 is a front elevation view, partially in phantom lines, of a machine according to the invention;

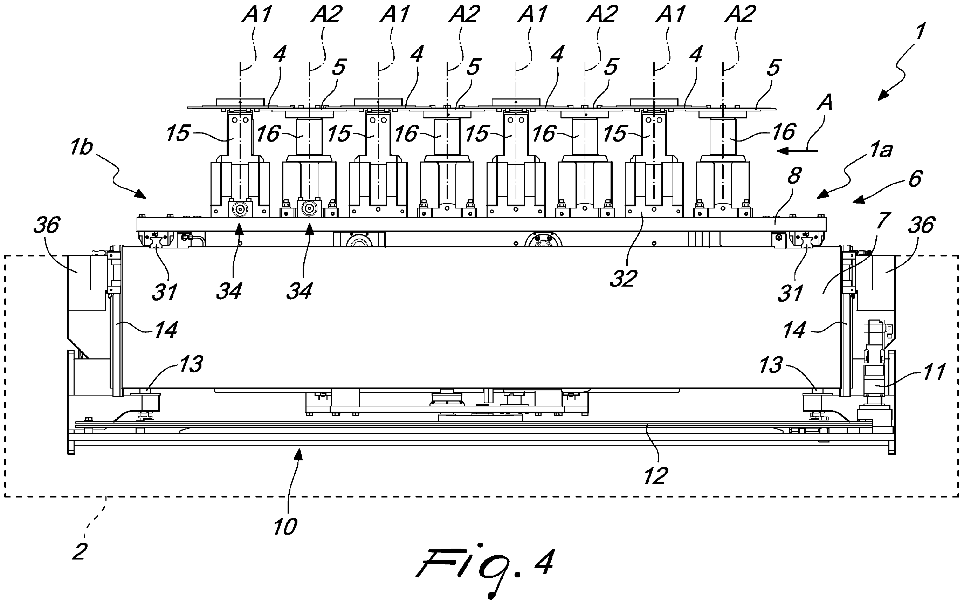

Figure 4 is a lateral elevation view, partially in phantom lines, of the machine of Figure 3;
Figure 5 is a top plan view of the working assemblies of the machine according to the invention;
Figure 6 is a perspective view of the working assemblies of the machine according to the invention;
Figure 7 is a perspective view of one of the working assemblies of the machine according to the invention;
Figure 8 is a lateral elevation view of the working assembly of Figure 7;
Figures 9, 10 and 11 are respective sectional views, taken along the planes IX-IX, X-X, XI-XI of Figure 8, respectively;

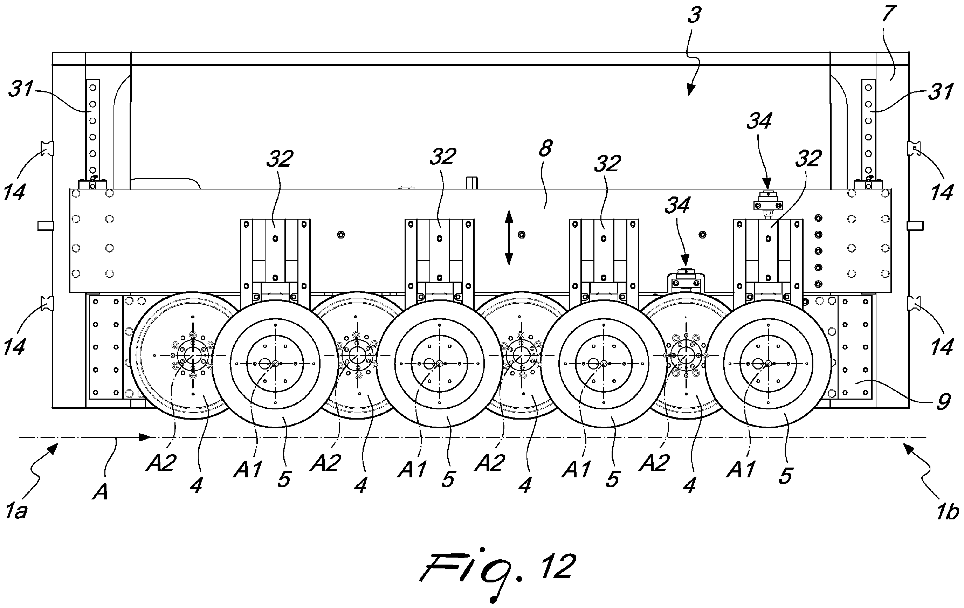

Figure 12 is a top plan view of the working assembly of Figure 7;
Figure 13 is a perspective view of the other one of the working assemblies of the machine according to the invention;
Figure 14 is a lateral elevation view of the working assembly of figure 13;
Figures 15-18 are respective sectional views, taken along the planes XV- XV, XVI-XVI, XVII-XVII, XVIII-XVIII of Figure 14;
Figure 19 is a top plan view of the working assembly of Figure 14.

With particular reference to the figures, a rolling machine for assembling heat-cut profiles is generally designated by the reference numeral 1.

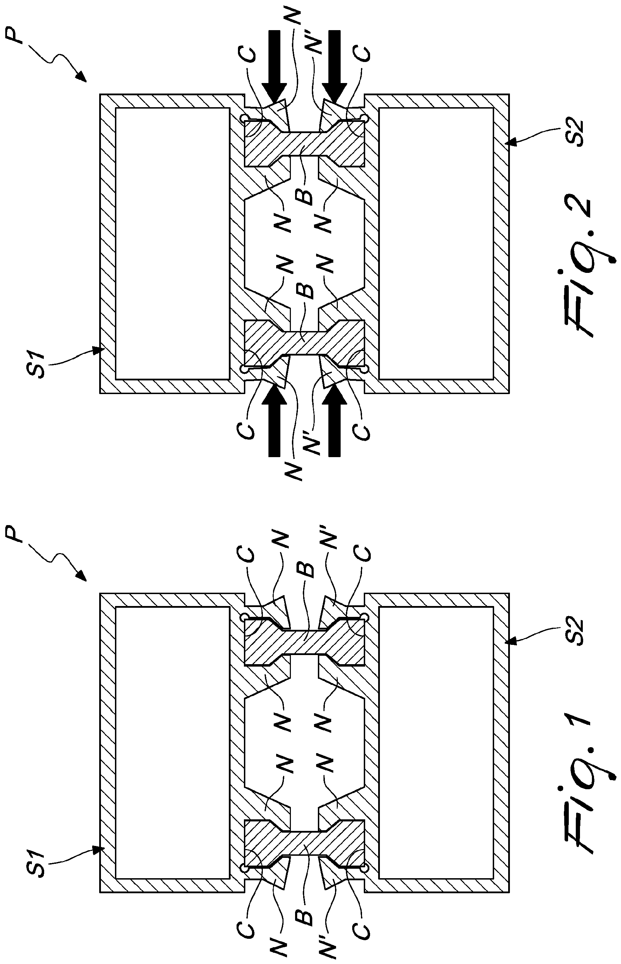

As is known, a heat-cut profile P, which is shown by way of example in Figures 1 and 2, is composed of a first profile portion S1 and a second profile portion S2 constituted by respective extruded bars made of aluminum, each of which is provided in the peripheral region with at least one longitudinal slot C which is delimited by a pair of opposite ribs N and N'. The profile portions S1 and S2 are arranged mutually side-by-side with their slots C facing each other so as to define at least one receptacle for a corresponding connecting partition B, constituted by an elongated strip made of thermally insulating material of the type of polyamide or other plastic material.

The cross-section of the profile portions S1 and S2 and of the profile P, which is composed by them, can have multiple shapes depending on the requirements of the case. Each profile portion S1 or S2 has the corresponding protruding ribs N and the remaining portion of the cross-section all comprised in a half-plane delimited by the outline of the plane of arrangement of said ribs in order to allow the assembly of the profile.

It should be noted that each profile portion S1 or S2 can provide for one or more parallel slots C so as to define one or more receptacles of respective connecting partitions B. The illustrated embodiment shows a profile P provided with two connecting partitions B, the profile portions S1 and S2 of which are each provided with two slots C, so that by juxtaposing the two profile portions S1 and S2 with the associated slots C facing each other in pairs, two seats for accommodating respective connecting partitions B are delimited.

In this situation, the term "external" ribs, designated in the figures by the reference sign N', means the end ribs, which are arranged toward the peripheral region of the profile portion S1 or S2 and are therefore accessible during the working of said profile portion.

Figures 1 and 2 show the transverse cross-section of the profile P, respectively, before and after the deformation of the external ribs N' performed by the machine 1 in order to obtain the clamping of the connecting partitions B inside the respective slots C and, therefore, the assembly of said profile.

The profile P is loaded onto the machine 1 already pre-assembled with the connecting partitions B accommodated between the profile portions S1 and S2 arranged one above the other and is moved through said machine along a substantially horizontal advancement direction A that coincides with the extension of said profile, so that the external ribs N' are accessible from opposite sides of the advancement direction A.

The term "substantially" means "within" the usual working and assembly tolerances of the component parts.

The machine 1 is provided with idle roller conveyors for supporting and guiding the profile P being worked along the advancement direction A and with an automatic system for the advancement of the profile P along said advancement direction, which are not shown since they are of a conventional type.

The machine 1 comprises a supporting footing 2 which extends along the advancement direction A of the profile P being worked, a working assembly 3 associated with the footing 2 on each side of the advancement direction A and comprising at least one first roller 4 and at least one second roller 5, which are arranged at different work elevations and are supported in rotation about respective working axes A1 and A2 which are substantially vertical, and support, adjustment and rotational actuation means 6 of each one of the rollers 4 and 5.

In the embodiment shown, the at least one first roller 4 is arranged at a work elevation with respect to the footing 2 that is greater than the at least one second roller 5, being arranged above it, but it is not excluded that the opposite might occur.

For each working assembly 3, the working axes A1 and A2, respectively, of the at least one first roller 4 and of the at least one second roller 5 are offset parallel to the advancement direction A and the support, adjustment and rotational actuation means 6 are arranged below the rollers.

The term "offset" means that they are spaced parallel to the advancement direction A and the individual working axes A1 and A2 can also be arranged at different distances from said advancement direction.

The first and second rollers 4 and 5 each provide at least one rolling disk adapted to press, with its own peripheral region, against a corresponding external rib N'.

It is not excluded, in any case, that one or more first and second rollers 4 and/or 5 might provide two coaxial and rotationally integral disks in order to perform the simultaneous rolling of distinct external ribs N'.

In a preferred embodiment, each working assembly 3 comprises a plurality of first rollers 4 and a plurality of second rollers 5 which are arranged so as to be mutually alternated and offset parallel to the advancement direction A. The first and second rollers 4 and 5 are distributed from the input region 1a to the exit region 1b of the profile P along the advancement direction.

In the embodiment shown, for example, each working assembly 3 comprises four first rollers 4 and four second rollers 5 which are arranged so as to be mutually alternated and offset parallel to the advancement direction A.

For each working assembly 3, the first rollers 4 are integral, in rotation about the respective working axes A1, with corresponding first shafts 15 having a substantially vertical arrangement and the second rollers 5 are integral, in rotation about the respective working axes A2, with associated second shafts 16 having a substantially vertical arrangement.

For each working assembly 3, the support, adjustment and rotational actuation means 6 comprise first motor means 17 for actuating rotationally the first rollers 4 and a first gear system 18 for transmitting the rotation to the corresponding first shafts 15, which is associated at the lower ends of the first shafts 15.

Furthermore, for each working assembly 3, the support, adjustment and rotational actuation means 6 comprise second motor means 19 for rotational actuation of the second rollers 5 and a second gear system 20 for transmitting the rotation to the corresponding second shafts 16, which is associated at the lower ends of the second shafts 16.

In each working assembly 3, the support, adjustment and rotational actuation means 6 comprise a bed 7 which supports a first beam 8 for supporting the first rollers 4 and a second beam 9 for supporting the second rollers 5. The first and second beams 8 and 9 substantially extend parallel to the advancement direction A. The first and second beams 8 and 9 have a substantially horizontal arrangement. The bed 7 is associated with the footing 2 so as to slide in a substantially vertical direction, so as to be able to adjust the work elevation of the first and second rollers 4 and 5. The support, adjustment and rotational actuation means 6 comprise, furthermore, first actuation means 10 for the actuation with an alternating translational motion in a substantially vertical direction of the bed 7 with respect to the footing 2.

Such first actuation means 10 can provide, for example, for a first motor 11 which, by virtue of a chain drive 12, actuates rotationally two first recirculating ballscrews 13 with a substantially vertical arrangement, which are supported by the footing 2 and are coupled to first nuts (not shown in the figures) associated with the bed 7 at the corresponding longitudinal ends along the advancement direction A in order to actuate the alternating translational motion thereof in a substantially vertical direction. Furthermore, the first actuation means 10 comprise first sliders 36 which are integral with the footing 2 and are coupled so as to slide along first guides 14 which have a substantially vertical arrangement and are associated with the bed 7 at the associated longitudinal ends along the advancement direction A.

Alternative embodiments of the first actuation means 10 are not excluded.

The first actuation means 10 of each working assembly 3 allow the simultaneous adjustment of the work elevation (height) of the corresponding first and second rollers 4 and 5.

Preferably, each working assembly 3 provides for first independent actuation means 10.

Furthermore, in each working assembly 3 the first rollers 4 are associated with the first beam 8 so as to slide in a substantially vertical direction. In this manner it is possible to adjust further the work elevation of the first rollers 4 with respect to that of the second rollers 5 of the same working assembly 3.

The support, adjustment and rotational actuation means 6 comprise, therefore, second actuation means 21 for the actuation with an alternating translational motion in a substantially vertical direction of the first rollers 4 with respect to the first beam 8.

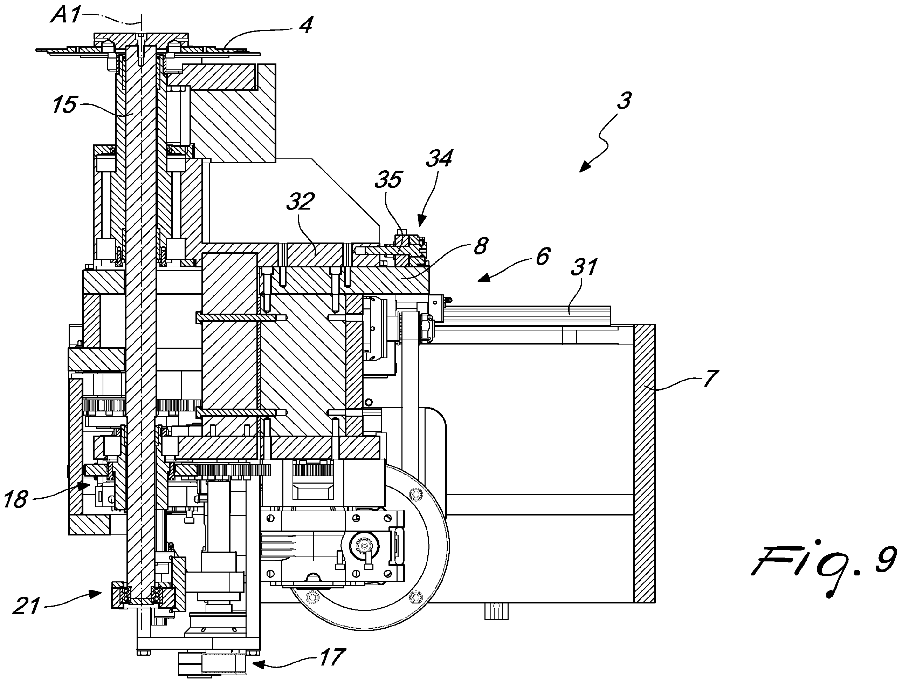

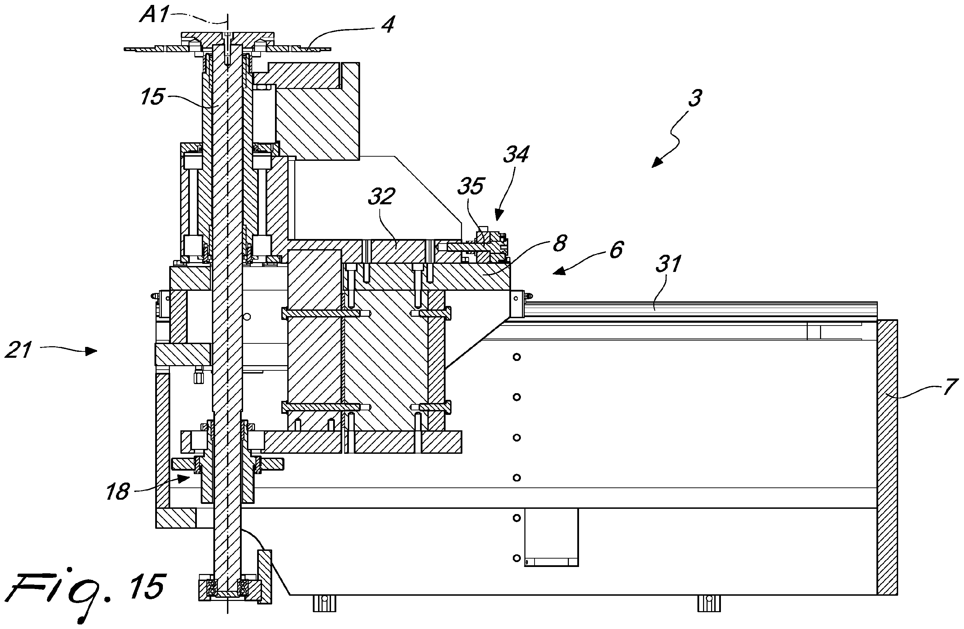

In this case, the first shafts 15 are associated so as to slide in a substantially vertical direction with respect to the first beam 8 and the second actuation means 21 (Figures 9 and 15) can provide, for example, a support of said first shafts which can move in a substantially vertical direction along associated guides and is actuated so as to slide with an alternating motion by a dedicated servomotor.

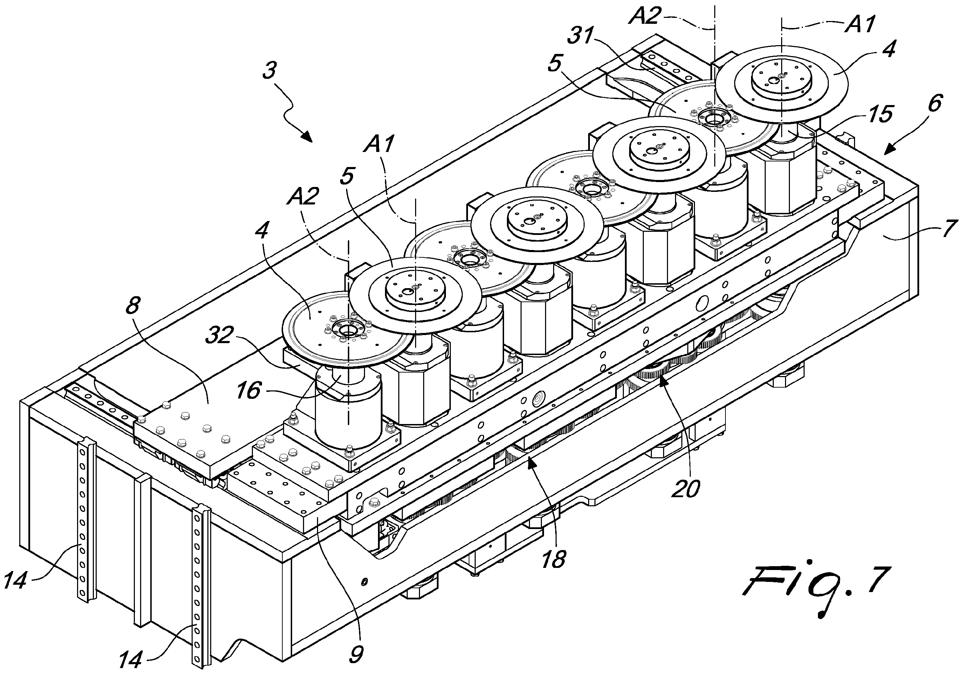

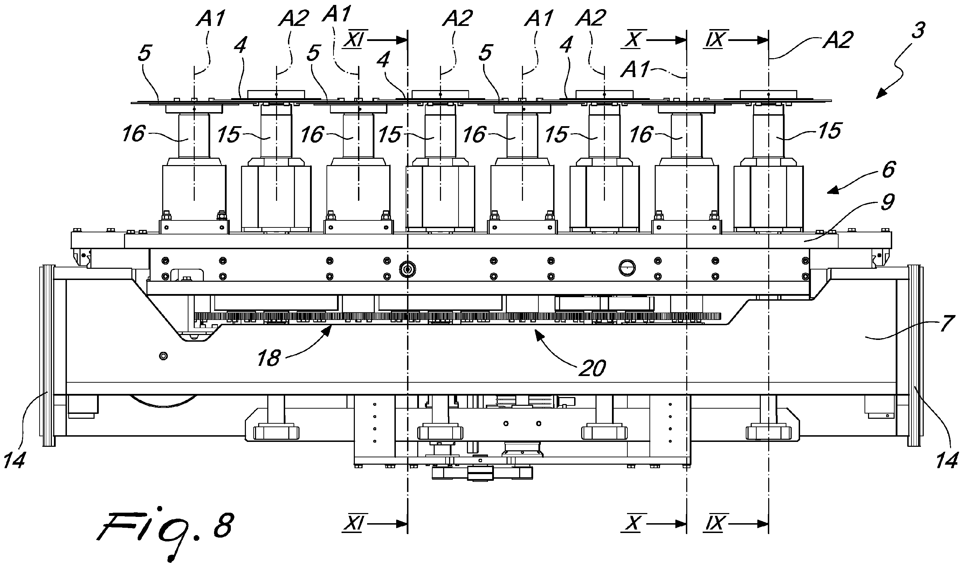

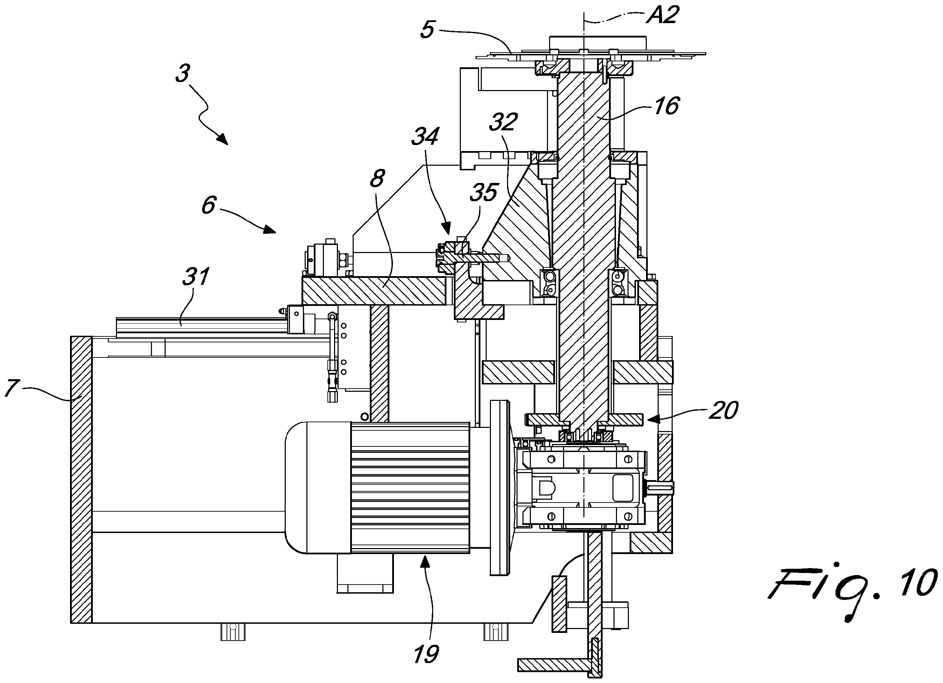

In a preferred embodiment, one of the working assemblies 3 (Figures 7-11) has the second beam 9 associated integrally with the bed 7 in a horizontal and transverse direction with respect to the advancement direction A, so as to define a fixed reference for the arrangement of the profile P being worked. The first beam 8, instead, is associated so as to slide, with respect to the bed 7, in a substantially horizontal direction which is transverse with respect to the advancement direction A.

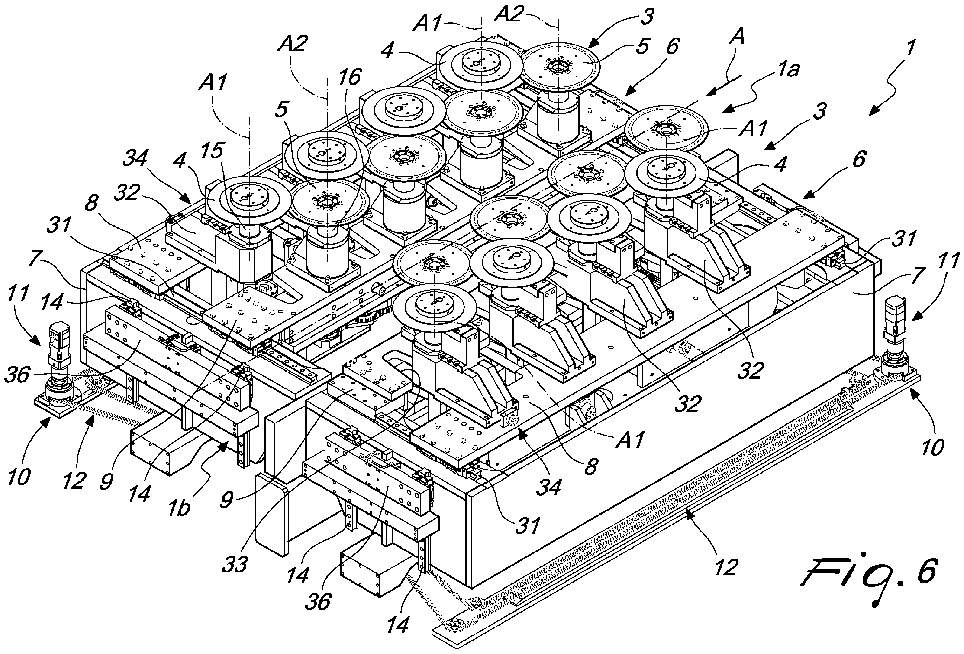

In the embodiment shown (Figure 6), this working assembly 3 with the second beam 9 integral with the bed 7 in a horizontal direction which is transverse to the advancement direction A is arranged on the left side of the machine 1 with respect to said advancement direction.

The support, adjustment and rotational actuation means 6 comprise, therefore, third actuation means 22 for the actuation, with an alternating translational motion in a substantially horizontal direction which is transverse to the advancement direction A, of the first beam 8 with respect to the bed 7.

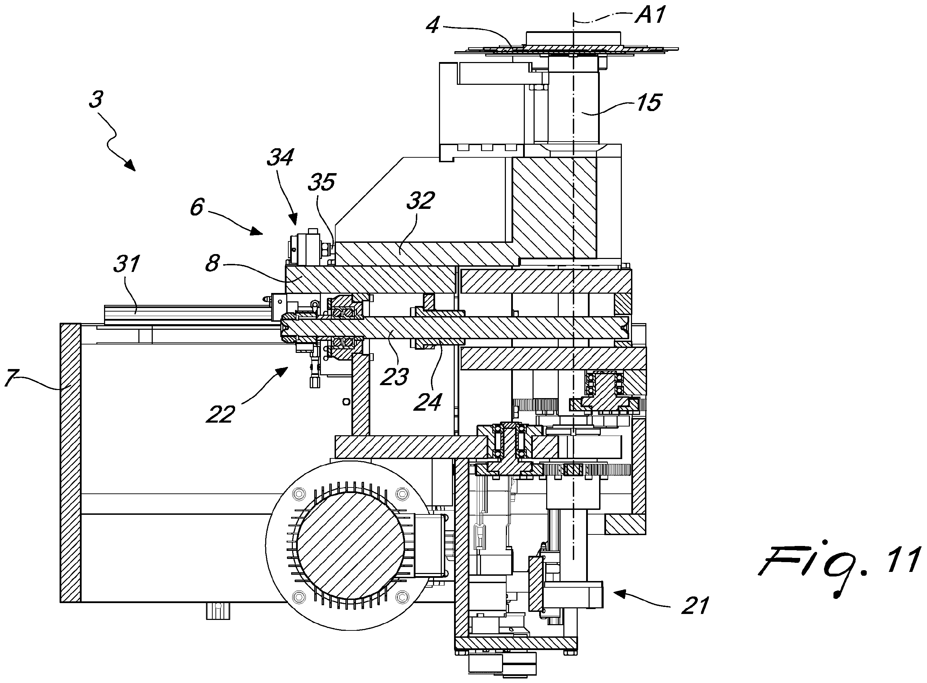

Said third actuation means 22 (Figure 11) can comprise, for example, at least one third recirculating ballscrew 23 which has a substantially horizontal arrangement, is supported by the bed 7 and is coupled to a third nut 24 which is integral with the first beam 8, and conventional third means for rotational actuation of said third screw, which are not visible in the figures.

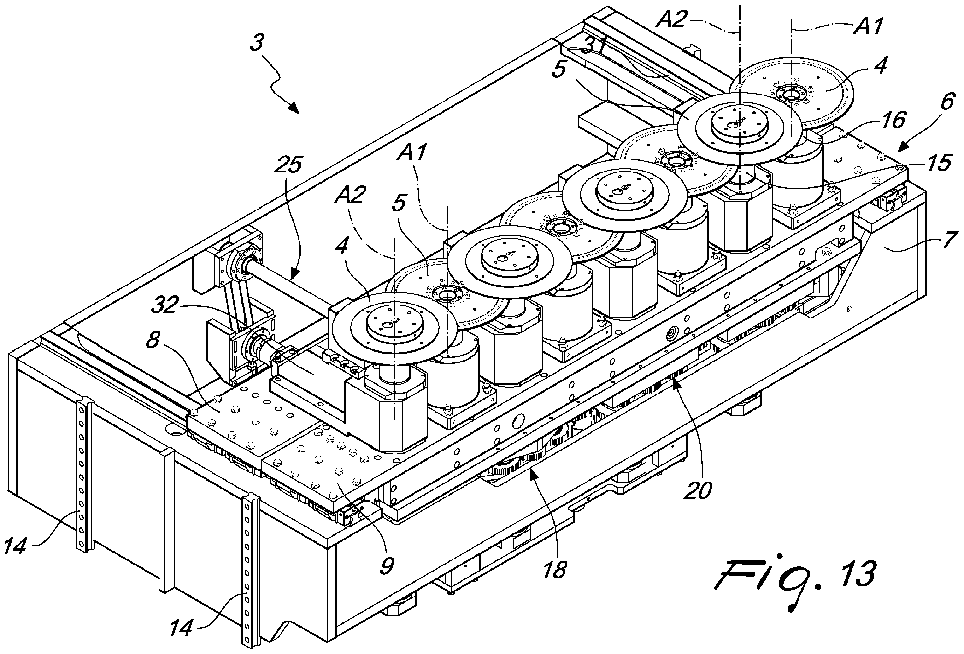

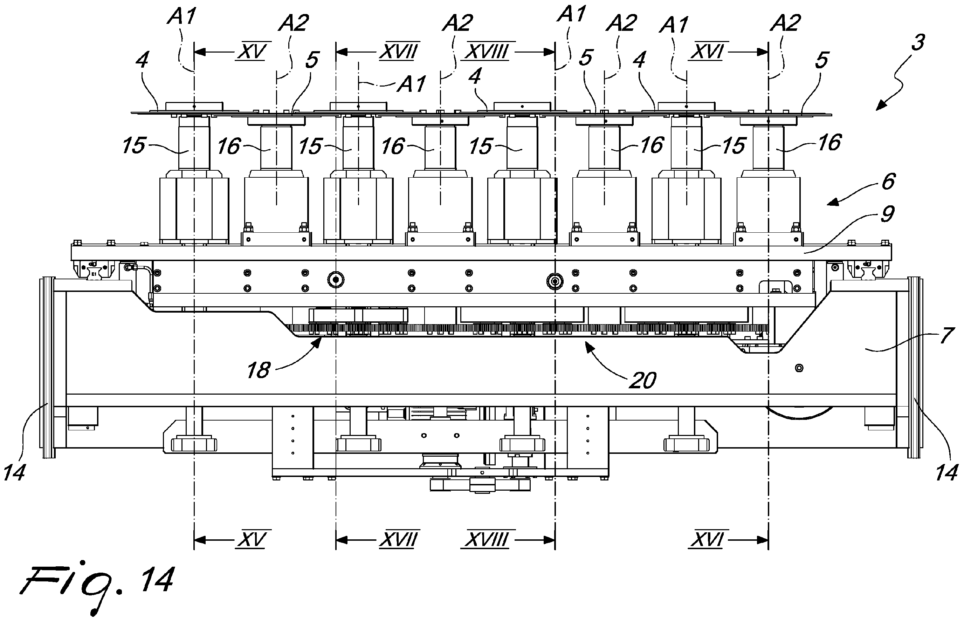

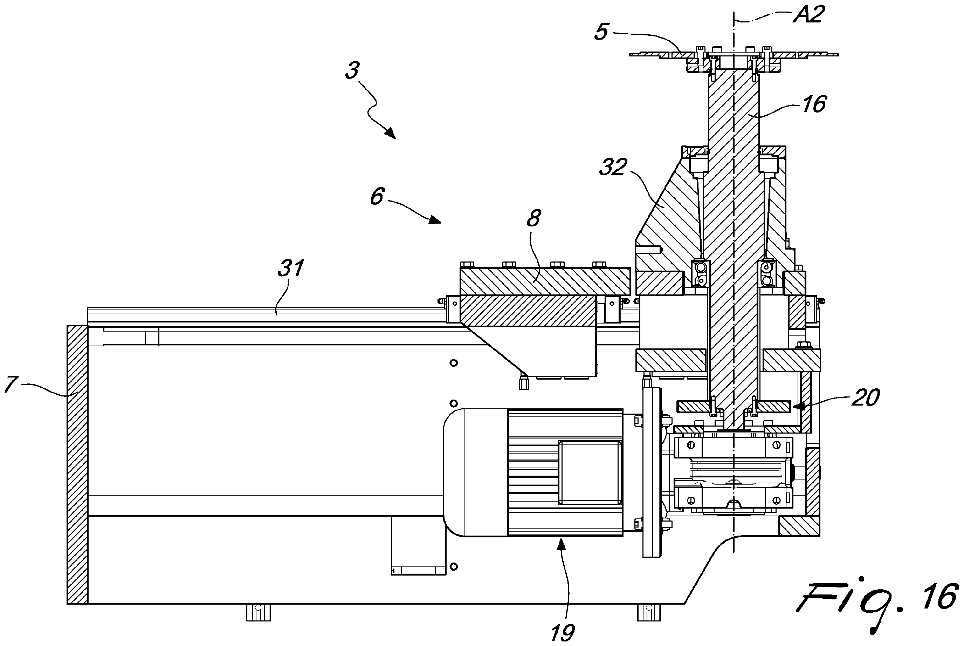

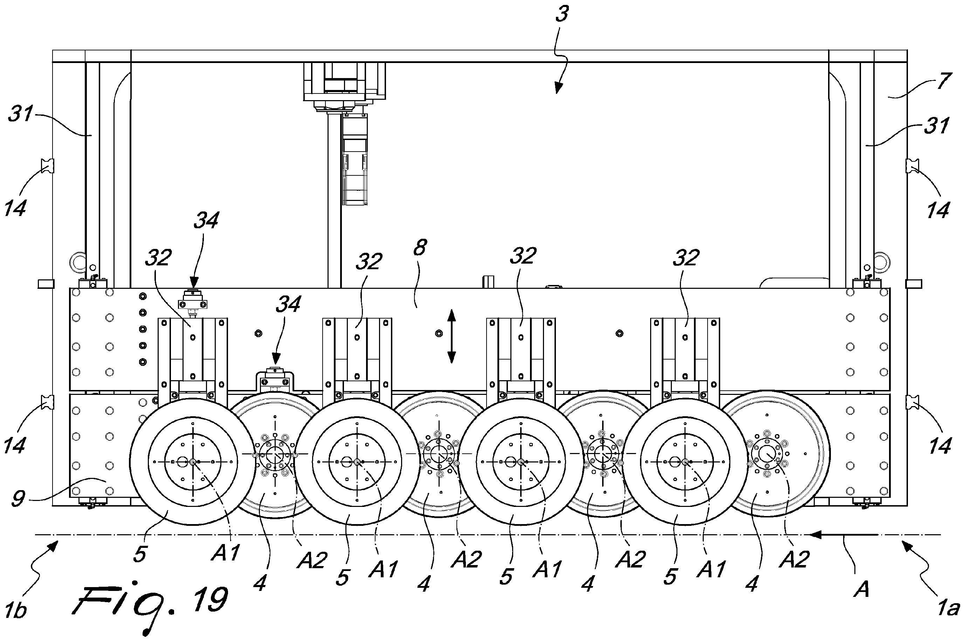

In the preferred embodiment, the other of the working assemblies 3 (Figures 13-19) has both the first beam 8 and the second beam 9 associated with the bed 7 so that they can slide in a substantially horizontal direction which is transverse to the advancement direction A. The support, adjustment and rotational actuation means 6 comprise, therefore, fourth actuation means 25 for the actuation, with an alternating translational motion in a direction that is substantially horizontal and transverse to the advancement direction A, of the first and second beams 8 and 9 with respect to the bed 7.

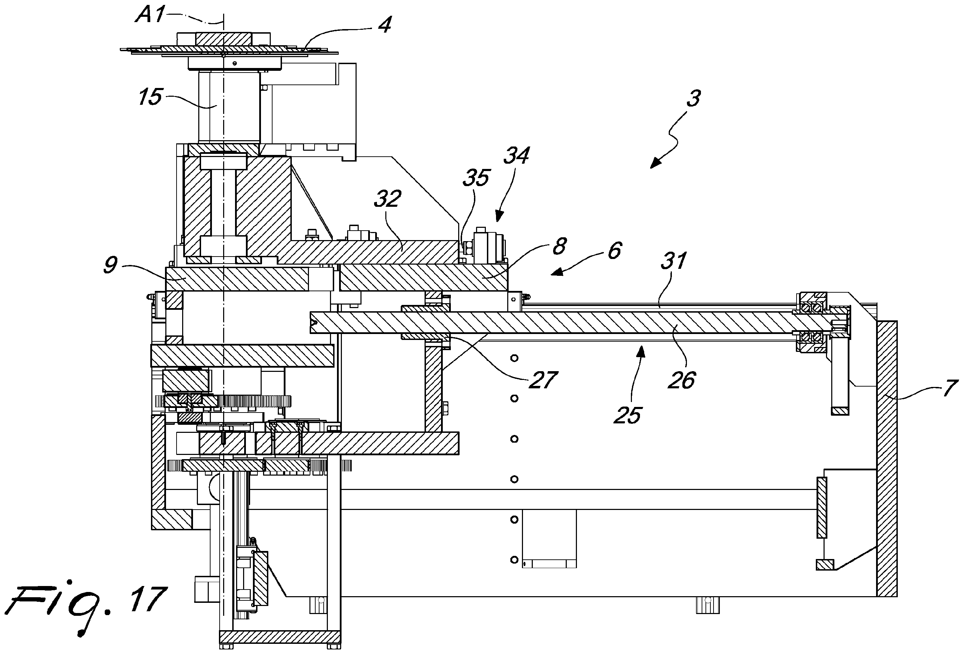

The fourth actuation means 25 (Figure 17) can comprise, for example, at least one fourth recirculating ballscrew 26 which has a substantially horizontal arrangement, is supported by the bed 7 and is coupled to a fourth nut 27 which is integral with the first beam 8, and conventional fourth means for rotationally actuating said fourth screw, which are not visible in the figures, there being furthermore connection elements interposed between the first and second beams 8 and 9 for the translation actuation of said second beam.

Preferably, the first beam 8 is associated, so that it can slide in a substantially horizontal direction which is transverse to the advancement direction A, with the second beam 9.

The support, adjustment and rotational actuation means 6 further comprise fifth actuation means 28, with an alternating translational motion in a substantially horizontal direction which is transverse to the advancement direction A, of the first beam 8 with respect to the second beam 9.

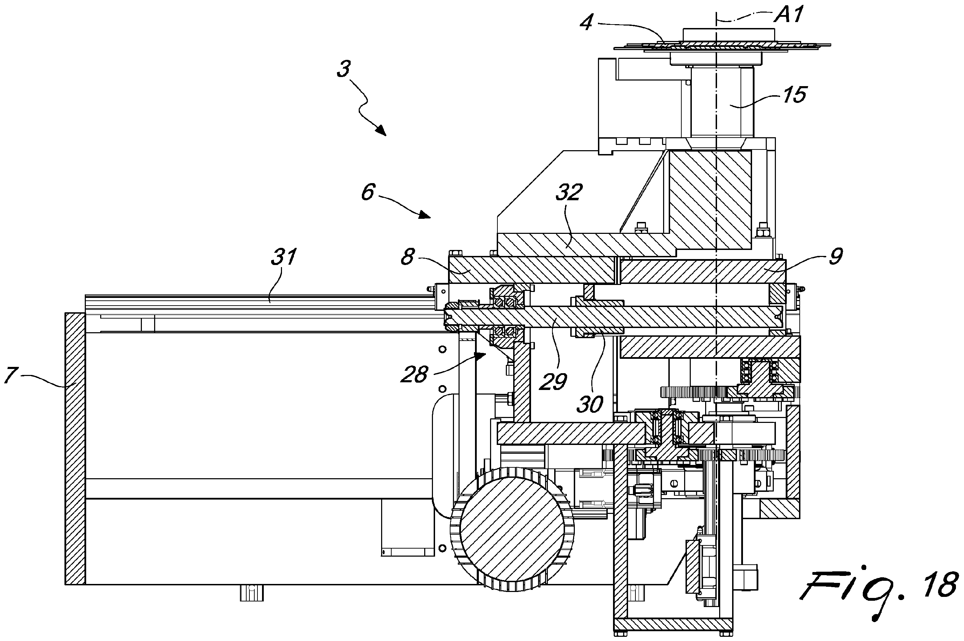

Said fifth actuation means 28 (Figure 18) can comprise, for example, at least one fifth recirculating ballscrew 29 which has a substantially horizontal arrangement, is supported by the second beam 9 and is coupled to a fifth nut 30 which is integral with the first beam 8, and conventional fifth means for rotationally actuating said fifth screw, which are not visible in the figures.

When they are not activated, the fifth actuation means 28 act as connection elements between the first and second beams 8 and 9 for simultaneous movement, with an alternating translational motion in a direction that is substantially horizontal and transverse to the advancement direction A, actuated by the fourth actuation means 25.

For each working assembly 3, the bed 7 provides, in an upper region, linear guides 31 to which the first beam 8 or both the first and second beams 8 and 9 are coupled so as to slide in a direction that is substantially horizontal and transverse to the advancement direction A.

The sliding direction is preferably at right angles to the advancement direction A.

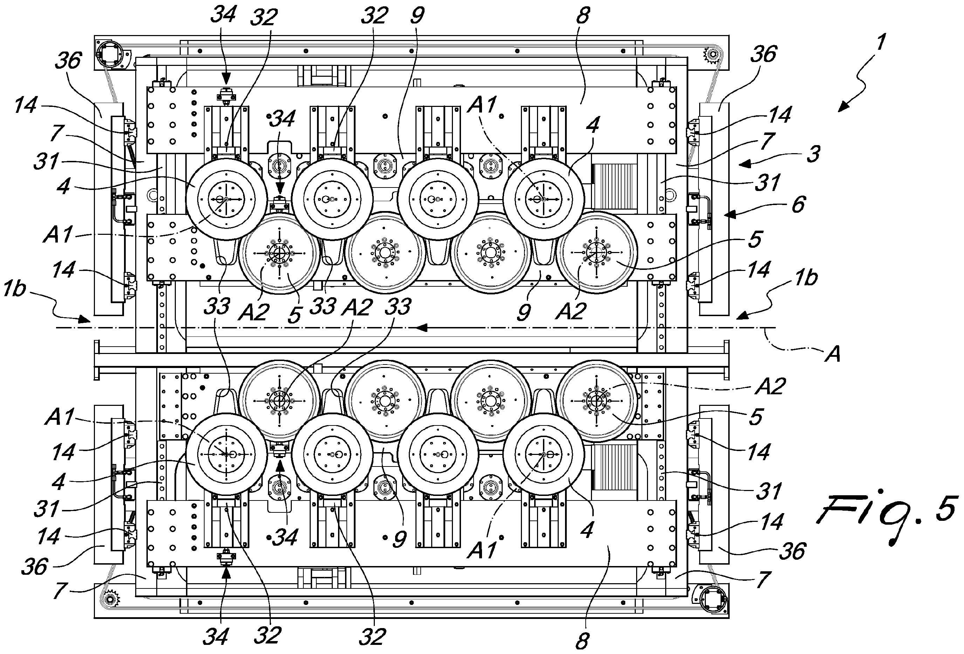

In each working assembly 3, the first beam is further spaced from the advancement direction A than the second beam 9, the first beam 8 being provided with a tab 32 for supporting each first roller 4 which can be inserted in a corresponding notch 33 formed in the second beam 9 between two adjacent second rollers 5 (Figures 5 and 6).

The first shafts 15 protrude in an upper region from respective supporting tabs 32.

In this manner, the working axes A1 of the first rollers 4 can be brought to the same distance from the advancement direction A as the working axes A2 of the second rollers 5 or even closer to said direction as a function of the depth of the notches 33 in order to optimize the flexibility of use of the machine 1 as the shape of the cross-section of the profile P varies.

Preferably, in each one of the working assemblies 3 at least the last first roller 4 and the last second roller 5 along the advancement direction A are associated with means 34 for the fine adjustment of the position in a direction that is substantially horizontal and transverse to said advancement direction of the corresponding working axes A1 and A2.

In this manner, it is possible to increase the intensity of the last compression applied to the external ribs N' of the profile P in order to ensure a better clamping of the connecting partitions B in the corresponding slots C and, therefore, a stable assembly of said profile.

The fine adjustment means 34 can comprise, for example, a pusher screw 35 which presses against the supporting elements of the corresponding first or second shaft 15 or 16, which are supported with play by the corresponding beams 8 and 9.

The machine 1 can be provided with a frame for the covering and protection of the working assemblies 3, provided with openings at the input region 1a and exit region 1b, which is not shown in the figures.

In practice it has been found that the described invention achieves the intended aim and objects and in particular the fact is stressed that the rolling machine according to the invention allows to optimize the arrangement of the rollers as a function of the type of profile being worked, allowing to perform its assembly easily and effectively regardless of the dimensions of the profile portions and of the connecting partitions that constitute it.

Furthermore, the rolling machine according to the invention has the working region easily accessible for the mounting of any fixtures for supporting the profile being worked.

The invention thus conceived is susceptible of numerous modifications and variations, all of which are within the scope of the appended claims.

In practice, the materials used, as well as the contingent shapes and dimensions, may be any according to the requirements without abandoning the protective scope of the claims that follow.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rolling machine (1) for assembling heat-cut profiles, comprising a supporting footing (2) which extends along an advancement direction (A) of a profile (P) being worked, a working assembly (3) associated with said footing (2) on each side of said advancement direction (A) and comprising at least one first roller (4) and at least one second roller (5), which are arranged at different work elevations and are supported in rotation about respective working axes (A1, A2) which are substantially vertical, and support, adjustment and rotational actuation means (6) associated with said at least one first roller (4) and at least one second roller (5), **characterized in that** for each one of said working assemblies (3) the working axes (A1, A2) of said at least one first roller (4) and at least one second roller (5) are arranged so as to be offset parallel to said advancement direction (A) and **in that** said support, adjustment and rotational actuation means (6) are arranged below said at least one first roller (4) and said at least one second roller (5).

2. The machine (1) according to claim 1, **characterized in that** for each one of said working assemblies (3) said support, adjustment and rotational actuation means (6) comprise a bed (7) which supports a first beam (8) for supporting said at least one first roller (4) and a second beam (9) for supporting said at least one second roller (5) which is associated with said footing (2) so as to slide in a substantially vertical direction, first actuation means (10) being provided for the actuation with an alternating translational motion in a substantially vertical direction of the bed (7) with respect to the footing (2).

3. The machine (1) according to claim 2, **characterized in that** said at least one first roller (4) is associated so as to slide in a substantially vertical direction with said first beam (8), the support, adjustment and rotational actuation means (6) further comprising second actuation means (21) for the actuation with an alternating translational motion in a substantially vertical direction of the at least one first roller (4) with respect to the first beam (8).

4. The machine (1) according to claim 2, **characterized in that** said first beam (8) is associated in sliding in a direction that is substantially horizontal and transverse to said advancement direction (A) with said bed (7), the support, adjustment and rotational actuation means (6) further comprising third actuation means (22) for actuation with an alternating translational motion in a direction which is substantially horizontal and transverse to the advancement direction (A) of the first beam (8) with respect to the bed (7), the second beam (9) being associated integrally with the bed (7).

5. The machine (1) according to claim 2, **characterized in that** said first and second beams (8, 9) are associated with said bed (7) so as to slide in a direction that is substantially horizontal and transverse to said advancement direction (A), the support, adjustment and rotational actuation means (6) further comprising fourth actuation means (25) for actuation with an alternating translational motion in a direction that is substantially horizontal and transverse to the advancement direction (A) of the first and second beams (8, 9) with respect to the bed (7).

6. The machine (1) according to claim 5, **characterized in that** said first beam (8) is associated with said second beam (9) so as to slide in a substantially horizontal and transverse direction with respect to said advancement direction (A), the support, adjustment and rotational actuation means (6) further comprising fifth actuation means (28) for actuation with an alternating translational motion in a direction that is substantially horizontal and transverse to said advancement direction (A) of the first beam (8) with respect to the second beam (9).

7. The machine (1) according to one or more of the preceding claims, **characterized in that** for each working assembly (3) said first beam (8) is further spaced from said advancement direction (A) with respect to said second beam (9), the first beam (8) being provided with at least one tab (32) for supporting the at least one first roller (4) which can be inserted in a corresponding notch (33) formed in the second beam (9).

8. The machine (1) according to one or more of the preceding claims, **characterized in that** for each one of said working assemblies (3) said at least one first roller (4) and said at least one second roller (5) comprise at least one respective rolling disk.

9. The machine (1) according to one or more of the preceding claims, **characterized in that** each working assembly (3) comprises a plurality of said first rollers (4) associated with said first beam (8) and a plurality of said second rollers (5) associated with said second beam (9), the first and second beams (8, 9) being extended parallel to the advancement direction (A).

10. The machine (1) according to claim 9, **characterized in that** for each one of said working assemblies (3) at least the last first roller (4) and the last second roller (5) along said advancement direction (A) are associated with means (34) for the fine adjustment of the position in a direction that is substantially horizontal and transverse to said advancement direction.

## Patentansprüche

1. Eine Walzmaschine (1) zum Zusammenbauen von wärmegeschnittenen Profilen, die Folgendes umfasst: eine tragende Basis (2), die sich entlang einer Vorschubrichtung (A) eines bearbeiteten Profils (P) erstreckt, einen Arbeitsaufbau (3), der auf jeder Seite der Vorschubrichtung (A) mit der Basis (2) verbunden ist und mindestens eine erste Walze (4) und mindestens eine zweite Walze (5) umfasst, die auf verschiedenen Arbeitshöhen angeordnet und in der Drehung um entsprechende Arbeitsachsen (A1, A2) gelagert sind, die im Wesentlichen vertikal sind; und Lagerungs-, Einstell- und Drehantriebsmittel (6), die mit der mindestens einen ersten Walze (4) und mindestens einer zweiten Walze (5) verbunden sind; **dadurch gekennzeichnet, dass** bei jedem der Arbeitsaufbauten (3) die Arbeitsachsen (A1, A2) der mindestens einen ersten Walze (4) und mindestens einer zweiten Walze (5) parallel versetzt zu der Vorschubrichtung (A) angeordnet sind, und dadurch, dass die Lagerungs-, Einstell- und Drehantriebsmittel (6) unterhalb der mindestens einen ersten Walze (4) und der mindestens einen zweiten Walze (5) angeordnet sind.

2. Die Maschine (1) gemäß Anspruch 1, **dadurch gekennzeichnet, dass** bei jedem der Arbeitsaufbauten (3) die Lagerungs-, Einstell- und Drehantriebsmittel (6) ein Bett (7) umfassen, das einen ersten Tragebalken (8) zum Tragen der mindestens einen ersten Walze (4) und einen zweiten Tragebalken (9) zum Tragen der mindestens einen zweiten Walze (5) trägt, der mit der Basis (2) verbunden ist, um in eine im Wesentlichen vertikale Richtung zu gleiten; wobei erste Antriebsmittel (10) zum Antreiben des Bettes (7) mit einer alternierenden Translationsbewegung in eine im Wesentlichen vertikale Richtung mit Bezug auf die Basis (2) bereitgestellt sind.

3. Die Maschine (1) gemäß Anspruch 2, **dadurch gekennzeichnet, dass** die mindestens eine erste Walze (4) in eine im Wesentlichen vertikale Richtung gleitend mit dem ersten Tragebalken (8) verbunden ist, wobei die Lagerungs-, Einstell- und Drehantriebsmittel (6) weiter zweite Antriebsmittel (21) zum Antreiben der mindestens einen ersten Walze (4) mit einer alternierenden Translationsbewegung in einer im Wesentlichen vertikalen Richtung mit Bezug auf den ersten Tragebalken (8) umfasst.

4. Die Maschine (1) gemäß Anspruch 2, **dadurch gekennzeichnet, dass** der erste Tragebalken (8) beim Gleiten in einer Richtung, die im Wesentlichen horizontal und quer zu der Vorschubrichtung (A) ist, mit dem Bett (7) verbunden ist; wobei die Lagerungs-, Einstell- und Drehantriebsmittel (6) weiter dritte Antriebsmittel (22) zum Antreiben des ersten Tragebalkens (8) mit einer alternierenden Translationsbewegung in einer Richtung umfassen, die im Wesentlichen horizontal und quer zur Vorschubrichtung (A) mit Bezug auf das Bett (7) ist; wobei der zweite Balken (9) integral mit dem Bett (7) verbunden ist.

5. Die Maschine (1) gemäß Anspruch 2, **dadurch gekennzeichnet, dass** der erste und der zweite Tragebalken (8, 9) mit dem Bett (7) verbunden sind, um in eine Richtung zu gleiten, die im Wesentlichen horizontal und quer zu der Vorschubrichtung (A) ist; wobei die Lagerungs-, Einstell- und Drehantriebsmittel (6) weiter vierte Antriebsmittel (25) zum Antreiben des ersten und des zweiten Tragebalkens (8, 9) mit Bezug auf das Bett (7) mit einer alternierenden Translationsbewegung in einer Richtung umfassen, die im Wesentlichen horizontal und quer zur Vorschubrichtung (A) ist.

6. Die Maschine (1) gemäß Anspruch 5, **dadurch gekennzeichnet, dass** der erste Tragebalken (8) mit dem zweiten Tragebalken (9) verbunden ist, um in einer im Wesentlichen horizontalen und transversalen Richtung mit Bezug auf die Vorschubrichtung (A) zu gleiten; wobei die Lagerungs-, Einstell- und Drehantriebsmittel (6) weiter fünfte Antriebsmittel (28) zum Antreiben des ersten Tragebalkens (8) mit Bezug auf den zweiten Tragebalken (9) in eine Richtung umfassen, die im Wesentlichen horizontal und quer zu der Vorschubrichtung (A) ist.

7. Die Maschine (1) gemäß einem oder mehreren der obigen Ansprüche, **dadurch gekennzeichnet, dass** bei jedem Arbeitsaufbau (3) der erste Tragebalken (8) weiter von der Vorschubrichtung (A) beabstandet ist als der zweite Tragebalken (9); wobei der erste Tragebalken (8) mit mindestens einem Vorsprung (32) zum Tragen der mindestens einen Walze (4) ausgestattet ist, der in eine entsprechende im zweiten Tragebalken (9) geformte Nut (33) eingeführt werden kann.

8. Die Maschine (1) gemäß einem oder mehreren der obigen Ansprüche, **dadurch gekennzeichnet, dass** bei jedem der Arbeitsaufbauten (3) die mindestens eine erste Walze (4) und die mindestens eine zweite Walze (5) mindestens eine dazugehörige Wälzscheibe umfassen.

9. Die Maschine (1) gemäß einem oder mehreren der obigen Ansprüche, **dadurch gekennzeichnet, dass** jeder Arbeitsaufbau (3) eine Vielzahl der ersten Walzen (4) umfasst, die mit dem ersten Tragebalken (8) verbunden sind, und eine Vielzahl der zweiten Walzen (5), die mit dem zweiten Tragebalken (9) verbunden sind, wobei der erste und der zweite Balken (8, 9) sich parallel zur Vorschubrichtung (A) erstrecken.

10. Die Maschine (1) gemäß Anspruch 9, **dadurch gekennzeichnet, dass** bei jedem der Arbeitsaufbauten (3) mindestens die letzte erste Walze (4) und die letzte zweite Walze (5) entlang der Vorschubrichtung (A) mit Mitteln (34) zur Feineinstellung der Position in einer Richtung verbunden sind, die im Wesentlichen horizontal und quer zu der Vorschubrichtung ist.

## Revendications

1. Machine à laminer (1) pour assembler des profilés coupés à chaud, comprenant une semelle de support (2) qui s'étend le long d'une direction d'avance (A) d'un profilé (P) en cours d'usinage, un ensemble de travail (3) associé à ladite semelle (2) de chaque côté de ladite direction d'avance (A) et comprenant au moins un premier cylindre (4) et au moins un deuxième cylindre (5), qui sont placés à différentes hauteurs de travail et qui sont supportés en rotation autour d'axes de travail respectifs (A1, A2) qui sont sensiblement verticaux, et des moyens de support, de réglage et d'actionnement en rotation (6) associés audit au moins un premier cylindre (4) et audit au moins un deuxième cylindre (5), **caractérisée en ce que** pour chacun desdits ensembles de travail (3), les axes de travail (A1, A2) dudit au moins un premier cylindre (4) et dudit au moins un deuxième cylindre (5) sont disposés de façon à être décalés parallèlement à ladite direction d'avance (A) et **en ce que** lesdits moyens de support, de réglage et d'actionnement en rotation (6) sont placés sous ledit au moins un premier cylindre (4) et ledit au moins un deuxième cylindre (5).

2. Machine (1) selon la revendication 1, **caractérisée en ce que** pour chacun desdits ensembles de travail (3), lesdits moyens de support, de réglage et d'actionnement en rotation (6) comprennent un lit (7) qui supporte une première poutre (8) pour supporter ledit au moins un premier cylindre (4) et une deuxième poutre (9) pour supporter ledit au moins un deuxième cylindre (5) qui est associé à ladite semelle (2) afin de glisser dans une direction sensiblement verticale, un premier moyen d'actionnement (10) étant prévu pour l'actionnement avec un mouvement de translation alternatif dans une direction sensiblement verticale du lit (7) par rapport à la semelle (2).

3. Machine (1) selon la revendication 2, **caractérisée en ce que** ledit au moins un premier cylindre (4) est associé de manière à glisser dans une direction sensiblement verticale avec ladite première poutre (8), les moyens de support, de réglage et d'actionnement en rotation (6) comprenant en outre un deuxième moyen d'actionnement (21) pour l'actionnement avec un mouvement de translation alternatif dans une direction sensiblement verticale dudit au moins un premier cylindre (4) par rapport à la première poutre (8).

4. Machine (1) selon la revendication 2, **caractérisée en ce que** ladite première poutre (8) est associée en glissement dans une direction qui est sensiblement horizontale et transversale par rapport à ladite direction d'avance (A) avec ledit lit (7), les moyens de support, de réglage et d'actionnement en rotation (6) comprenant en outre un troisième moyen d'actionnement (22) pour l'actionnement avec un mouvement de translation alternatif dans une direction qui est sensiblement horizontale et transversale par rapport à la direction d'avance (A) de la première poutre (8) par rapport au lit (7), la deuxième poutre (9) étant solidaire du lit (7).

5. Machine (1) selon la revendication 2, **caractérisée en ce que** lesdites première et deuxième poutres (8, 9) sont associées audit lit (7) afin de glisser dans une direction qui est sensiblement horizontale et transversale par rapport à ladite direction d'avance (A), les moyens de support, de réglage et d'actionnement en rotation (6) comprenant en outre un quatrième moyen d'actionnement (25) pour l'actionnement avec un mouvement de translation alternatif dans une direction qui est sensiblement horizontale et transversale par rapport à la direction d'avance (A) des première et deuxième poutres (8, 9) par rapport au lit (7).

6. Machine (1) selon la revendication 5, **caractérisée en ce que** ladite première poutre (8) est associée à ladite deuxième poutre (9) afin de glisser dans une direction sensiblement horizontale et transversale par rapport à ladite direction d'avance (A), les moyens de support, de réglage et d'actionnement en rotation (6) comprenant en outre un cinquième moyen d'actionnement (28) pour l'actionnement avec un mouvement de translation alternatif dans une direction qui est sensiblement horizontale et transversale par rapport à la direction d'avance (A) de la première poutre (8) par rapport à la deuxième poutre (9).

7. Machine (1) selon l'une ou plusieurs des revendications précédentes, **caractérisée en ce que** pour chaque ensemble de travail (3), ladite première poutre (8) est davantage espacée de ladite direction d'avance (A) par rapport à ladite deuxième poutre (9), la première poutre (8) étant pourvue d'au moins une patte (32) pour supporter ledit au moins un premier cylindre (4) qui peut être insérée dans une encoche correspondante (33) formée dans la deuxième poutre (9).

8. Machine (1) selon l'une ou plusieurs des revendications précédentes, **caractérisée en ce que** pour chacun desdits ensembles de travail (3), ledit au moins un premier cylindre (4) et ledit au moins un deuxième cylindre (5) comprennent au moins un disque de laminage respectif.

9. Machine (1) selon l'une ou plusieurs des revendications précédentes, **caractérisée en ce que** chaque ensemble de travail (3) comprend une pluralité desdits premiers cylindres (4) associée à ladite première poutre (8) et une pluralité desdits deuxièmes cylindres (5) associée à ladite deuxième poutre (9), les première et deuxième poutres (8, 9) s'étendant parallèlement à la direction d'avance (A).

10. Machine (1) selon la revendication 9, **caractérisée en ce que** pour chacun desdits ensembles de travail (3), au moins le dernier premier cylindre (4) et le dernier deuxième cylindre (5) le long de ladite direction d'avance (A) sont associés à un moyen (34) pour le réglage fin de la position dans une direction qui est sensiblement horizontale et transversale par rapport à ladite direction d'avance.
